# EUROPÄISCHE PATENTSCHRIFT

(11) **EP 0 677 904 B1**
(45) Veröffentlichungstag und Bekanntmachung des Hinweises auf die Patenterteilung: **27.05.1998**
(21) Anmeldenummer: 95250069.2
(22) Anmeldetag: 22.03.1995
(51) Int. Cl.: H02B 11/00, H02B 11/10, H01H 15/10

(54) **Vorrichtung zur Meldung der Stellung eines Einschubes**
Device for signalling the position of a drawer
Dispositif pour signaler la position d'un tiroir

(30) Priorität: 12.04.1994 DE 4413182
(43) Veröffentlichungstag der Anmeldung: 18.10.1995
(73) Patentinhaber: SIEMENS AKTIENGESELLSCHAFT, 80333 München (DE)
(72) Erfinder: Deylitz, Erhard, D-10405 Berlin (DE)

(56) Entgegenhaltungen:
- EP-A- 0 528 445
- FR-A- 2 021 497

## Beschreibung

Die Erfindung betrifft eine Vorrichtung zur Meldung der Stellung eines Einschubes in einer Schaltanlage mit wenigstens zwei Meldeschaltern und einem die Meldeschalter in Abhängigkeit von der Stellung des Einschubes betätigenden Steuerorgan sowie mit einem Träger zur Aufnahme der Meldeschalter und zur Führung des Steuerorgans, wobei das Steuerorgan als mit Steuernocken versehener und geradlinig an dem Träger geführter Schieber ausgebildet ist.

Eine Vorrichtung der genannten Art ist durch die EP 0 528 445 Al bekannt geworden. Dabei wird das Steuerorgan durch einen Kontaktbrückenträger betätigt, der in dem Einschubträger verfahrbar angeordnet ist. Der Kontaktbrückenträger verbindet die Hauptstrombahnen des Einschubes, z. B. eines Niederspannungs-Leistungsschalters, mit dem ortsfesten Teil einer Schaltanlage. Neben dieser Bauweise für Haupttrennkontakte ist es auch bekannt, die Hauptstromkreise unmittelbar durch Verfahren des Einschubes in seinem Einschubträger in Eingriff zu bringen und zu trennen. In diesem Fall wird eine zuverlässig wirkende Vorrichtung benötigt, welche die Stellung des Einschubes relativ zu seinem Einschubträger signalisiert. Der Erfindung liegt in diesem Zusammenhang die Aufgabe zugrunde, eine Vorrichtung der genannten Art so auszubilden, daß sie mehrfach anwendbar ist, um eine größere Anzahl von Hilfsstromkreisen unabhängig voneinander betätigen zu können. Ferner ist es erwünscht, daß die Vorrichtung wahlweise an der linken oder an der rechten Seite eines Einschubes, prinzipiell aber auch an dessen Unterseite oder an der Oberseite, verwendet werden kann.

Diese Aufgabe wird gemäß der Erfindung dadurch gelöst, daß das Steuerorgan den Träger hintergreifende Führungsnasen und der Träger Durchtrittsöffnungen für die Führungsnasen besitzt, wobei die Durchtrittsöffnungen in einer von der Ruhestellung des Steuerorgans verschiedenen Position angeordnet sind und das Steuerogan bezüglich seiner Führungsbahn beidseitig Steuernocken besitzt und daß je nach Anbringung des Steuerorgans an dem Träger wahlweise der eine oder der andere Satz von Steuernocken benutzbar ist.

Zur Anwendung bei einem Einschub ist lediglich der Träger ortsfest derart anzubringen, daß der Einschub mit dem Steuerorgan gekuppelt ist. Die Verschiebung des Einschubes in seinem Einschubrahmen wird dann zwangsläufig auf das Steuerorgan übertragen, das seinerseits die Meldeschalter stellungsabhängig betätigt. Durch die Anordnung der den Träger hintergreifenden Führungsnasen kann das beispielsweise als einstückiges Kunststofformteil hergestellte Steuerorgan ohne gesonderte Führungs- oder Verbindungsteile mit dem Träger in Verbindung gebracht und an diesem gehalten werden. Damit ist die Umstellung der Vorrichtung von linksseitiger auf rechtsseitige Betätigung oder umgekehrt sehr einfach möglich.

Das Steuerorgan kann im Querschnitt etwa U-förmig mit Schenkeln ausgebildet sein, wobei zwischen den Schenkeln eine Rückstellfeder angeordnet ist, die wahlweise an einem von zwei an dem Träger angebrachten Widerlagern einhängbar ist. Hierdurch kann das Steuerorgan wahlweise in die eine oder die andere Richtung vorgespannt werden, je nachdem wie die Vorrichtung betätigt werden soll.

Es empfiehlt sich, Befestigungsöffnungen am Träger in der Verlängerung eines Führungssteges für das Steuerorgan und durch dieses überdeckbar anzuordnen. Damit wird eine Sicherung gegen die Demontage der Vorrichtung geschaffen. Ferner kann an der Montagefläche der Vorrichtung wenigstens ein derart in den Weg der Führungsnasen ragender Anschlag angeordnet sein, daß das Steuerorgan bei betriebsmäßig montierter Vorrichtung nicht abnehmbar ist.

Eine Vorrichtung nach der Erfindung wird im folgenden anhand des in den Figuren dargestellten Ausführungsbeispieles näher erläutert.

Die Figur 1 zeigt eine Vorrichtung zur Meldung der Stellung eines Einschubes, die zur Verwendung an der einen Seite des Einschubes vorgesehen ist, während eine zur Verwendung an der gegenüberliegenden Seite eingerichtete Vorrichtung in der Figur 2 dargestellt ist.

Die Figur 3 zeigt die Vorrichtung gemäß der Figur 1 in einer teilweise geschnittenen Stirnansicht mit angedeuteten Teilen eines Einschubrahmens und eines Einschubes.

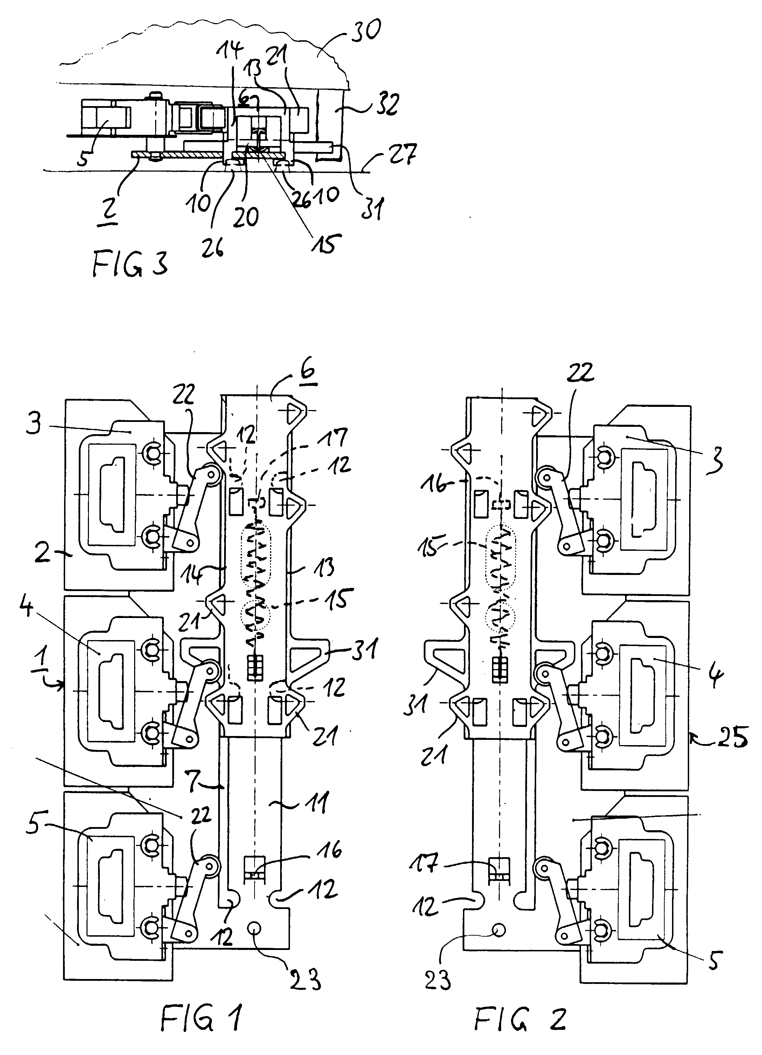

Die Vorrichtung 1 gemäß der Figur 1 weist einen im wesentlichen ebenen Träger 2 mit darauf montierten Meldeschaltern 3, 4 und 5 sowie ein an dem Träger 2 geführtes, als Schieber ausgebildetes Steuerorgan 6 auf, das als einstückiges Kunststoff-Formteil hergestellt ist. Der Träger 2 besteht zweckmäßig aus Blech und ist mit einem Führungsschlitz 7 für das Steuerorgan 6 versehen. Das Steuerorgan 6 besitzt zwei Paare von Führungsnasen 10, die einen durch den Führungsschlitz 7 gebildeten randseitigen Führungssteg 11 des Trägers 2 übergreifen (Figur 3). Durch randseitige Ausnehmungen und diesen gegenüberstehend angeordnete entsprechende Erweiterungen des Führungsschlitzes 7 werden Durchtrittsöffnungen 12 gebildet, die es gestatten, das Steuerorgan 6 mit dem Träger 2 in Eingriff zu bringen. Entlang dem Führungsschlitz 7 sind drei Paare von Durchtrittsöffnungen 12 angeordnet, wobei die Abstände zwischen zwei benachbarten Paaren von Durchtrittsöffnungen 12 dem Abstand der Paare von Führungsnasen 10 entspricht. Das Steuerorgan 6 ist im Querschnitt etwa U-förmig ausgebildet (Figur 3), wobei der Innenraum zwischen den Schenkeln 13 und 14 zur Aufnahme einer schraubenförmigen Rückstellfeder 15 dient, die wahlweise an einem aus dem Führungssteg 11 herausgedrückten Widerlager 16 oder 17 einhängbar ist. An der Innenseite des Steuerorgans 6 ist durch einen die Schenkel 13 und 14 verbindenden Quersteg 20 (Figur 3) gleichfalls ein Widerlager für die Rückstellfeder 15 gebildet.

Die Schenkel 13 und 14 des Steuerorgans 6 sind mit jeweils drei Steuernocken 21 versehen. Diese wirken mit den Meldeschaltern 3, 4 und 5 zusammen, beispielsweise mittels der gezeigten Rollenhebel 22. Die an jedem der Schenkel 13 und 14 vorhandenen Steuernocken 21 sind in solchen Abständen angebracht, daß bei einer Verschiebung des Steuerorgans 6 die Meldeschalter 3, 4 und 5 nacheinander betätigt werden, um beispielsweise die Trennstellung, die Teststellung und die Betriebsstellung eines Einschubgerätes zu signalisieren.

Durch die Ausgestaltung des Trägers 2 und des Steuerorgans 6 ist dafür gesorgt, daß die beiden Teile spiegelbildlich montierbar sind und auf diese Weise die Vorrichtung an beiden Seiten eines Einschubes verwendbar ist. Dies ist anhand der Figur 2 ersichtlich, die eine entsprechend abgewandelte Vorrichtung 25 zeigt. Wie man erkennt, sind bei der Vorrichtung 25 durch entsprechend geänderte Anbringung des Steuerorgans 6 nun die an dem Schenkel 13 befindlichen Steuernocken 21 wirksam. Ferner ist die Rückstellfeder 15 statt an dem Widerlager 16 an dem Widerlager 17 eingehängt.

Um eine irrtümliche oder mißbräuchliche Demontage der Vorrichtung zu vermeiden, sind in der Verlängerung des Führungssteges 11 des Trägers 2 zwei Befestigungsöffnungen 23 und 24 derart angebracht, daß je nach der links- oder rechtsseitigen Verwendung der Vorrichtung (Vorrichtung 1 gemäß Figur 1 bzw. Vorrichtung 25 gemäß der Figur 2) durch das Steuerorgan 6 verdeckbar ist. Ferner ist ein Anschlag 26 an einer Montagefläche 27 der Vorrichtung 1 derart angebracht, daß das Steuerorgan 6 von dem Träger 2 nicht abnehmbar ist (Figur 3). Der relativ zu dem Träger 2 und der Montagefläche 27 bewegbare Einschub, der in der Figur 3 bei 30 angedeutet ist, betätigt das Steuerorgan 6 mittels symmetrisch an dem Steuerorgan 6 angebrachter Vorsprünge 31 durch einen Mitnehmer 32.

## Patentansprüche

1. Vorrichtung zur Meldung der Stellung eines Einschubes (30) in einer Schaltanlage mit wenigstens zwei Meldeschaltern (3, 4, 5) und einem die Meldeschalter (3, 4, 5) in Abhängigkeit von der Stellung des Einschubes (30) betätigenden Steuerorgan (6), sowie mit einem Träger (2) zur Aufnahme der Meldeschalter (3, 4, 5) und zur Führung des Steuerorgans (6), wobei das Steuerogan (6) als mit Steuernocken (21) versehener und geradlinig an dem Träger (2) geführter Schieber ausgebildet ist,
**dadurch gekennzeichnet**, daß das Steuerorgan (6) den Träger (2) hintergreifende Führungsnasen (10) und der Träger (2) Durchtrittsöffnungen (12) für die Führungsnasen (10) besitzt, wobei die Durchtrittsöffnungen (12) in einer von der Ruhestellung des Steuerorgans (6) verschiedenen Position angeordnet sind und daß das Steuerorgan (6) bezüglich seiner Führungsbahn beidseitig Steuernocken (21) besitzt und daß je nach Anbringung des Steuerorgans (6) an dem Träger (2) wahlweise der eine oder der andere Satz von Steuernocken (21) benutzbar ist.

2. Vorrichtung nach Anspruch 1,
**dadurch gekennzeichnet,** daß das Steuerorgan (6) im Querschnitt etwa U-förmig mit Schenkeln (13, 14) ausgebildet ist, wobei zwischen den Schenkeln eine Rückstellfeder (15) angeordnet ist, die wahlweise an einem von zwei an dem Träger (2) angebrachten Widerlagern (16, 17) einhängbar ist.

3. Vorrichtung nach Anspruch 3,
**dadurch gekennzeichnet,** daß Befestigungsöffnungen (23, 24) am Träger (2) in der Verlängerung eines Führungssteges (11) für das Steuerorgan (6) und durch dieses überdeckbar angeordnet sind.

4. Vorrichtung nach einem der vorangehenden Ansprüche,
**dadurch gekennzeichnet,** daß an der Montagefläche (27) der Vorrichtung (1, 25) wenigstens ein derart in den Weg der Führungsnasen (10) ragender Anschlag (26) angeordnet ist, daß das Steuerorgan (6) bei betriebsmäßig montierter Vorrichtung (1, 25) nicht abnehmbar ist.

## Claims

1. Device for signalling the position of a drawer (30) in a switchgear unit, having at least two pilot switches (3, 4, 5) and a control element (6) actuating the pilot switches (3, 4, 5) as a function of the position of the drawer (30), as well as having a support (2) for holding the pilot switches (3, 4, 5) and for guiding the control element (6), the control element (6) being constructed as a slider which is provided with control cams (21) and guided rectilinearly on the support (2), characterized in that the control element (6) has guide lugs (10) engaging the support (2) at the rear, and the support (2) has through openings (12) for the guide lugs (10), the through openings (12) being arranged in a position different from the rest position of the control element (6), and in that the control element (6) has control cams (21) on both sides with respect to its guide track, and in that one or other set of control cams (21) can optionally be used depending on the attachment of the control element (6) to the support (2).

2. Device according to Claim 1, characterized in that the control element (6) is constructed in approximately U-shaped cross-section with limbs (13, 14), there being arranged between the limbs a resetting spring (15) which can optionally be hung on one of two abutments (16, 17) attached to the support (2).

3. Device according to Claim 3, characterized in that fastening openings (23, 24) on the support (2) are arranged in the extension of a guide web (11) for the control element (6) and can be covered by the latter.

4. Device according to one of the preceding claims, characterized in that at least one stop (26) projecting into the path of the guide lugs (10) is arranged on the mounting surface (27) of the device (1, 25) in such a way that the control element (6) cannot be removed with the device (1, 25) mounted operationally.

## Revendications

1. Dispositif servant à signaler la position d'un tiroir (30) dans une installation de distribution électrique et comportant au moins deux commutateurs (3, 4, 5) de signalisation et un organe (6) de commande actionnant les commutateurs (3, 4, 5) de signalisation en fonction de la position du tiroir (30), ainsi que comportant un support (2) pour recevoir les commutateurs (3, 4, 5) de signalisation et pour guider l'organe (6) de commande, l'organe (6) de commande étant réalisé en curseur muni de cames (21) de commande et guidé en ligne droite sur le support (2),
caractérisé en ce que l'organe (6) de commande comprend des becs (10) de guidage s'accrochant sous le support (2) et en ce que le support (2) comporte des ouvertures (12) de passage pour les becs (10) de guidage, les ouvertures (12) de passage étant ménagées en une position différente de la position de repos de l'organe (6) de commande, et en ce que l'organe (6) de commande comporte, par rapport à sa voie de guidage, des cames (21) de commande de part et d'autre et en ce que, suivant le montage de l'organe (6) de commande sur le support (2), l'un ou l'autre groupe de cames (21) de commande peut être utilisé au choix.

2. Dispositif suivant la revendication 1,
caractérisé en ce que l'organe (6) de commande est de section transversale à peu près en forme de U comportant des branches (13. 14), un ressort (15) de rappel, qui peut être accroché à l'une de deux butées (16, 17) ménagées sur le support (2), étant disposé entre les branches.

3. Dispositif suivant la revendication 2,
caractérisé en ce que des ouvertures (23, 24) de fixation sont ménagées sur le support dans le prolongement d'une barre (11) de guidage de l'organe (6) de commande, ces ouvertures pouvant être recouvertes par l'organe (6) de commande.

4. Dispositif suivant l'une des revendications précédentes,
caractérisé en ce qu'il est ménagé sur la surface (27) de montage du dispositif (1, 25) au moins une butée (26) qui fait saillie dans la voie des becs (10) de guidage de telle manière que l'organe (6) de commande ne peut pas être retiré lorsque le dispositif (1, 25) est monté pour fonctionner.
